Europäisches Patentamt

European Patent Office

Office européen des brevets

(19)

(11) Veröffentlichungsnummer : **0 415 014 B1**

(12) **EUROPÄISCHE PATENTSCHRIFT**

(45) Veröffentlichungstag der Patentschrift :
30.09.92 Patentblatt 92/40

(51) Int. Cl.⁵ : **B60J 5/06, B62D 33/04**

(21) Anmeldenummer : **90111155.9**

(22) Anmeldetag : **13.06.90**

(54) **Fahrzeugaufbau.**

(30) Priorität : **30.08.89 DE 3928745**

(43) Veröffentlichungstag der Anmeldung :
**06.03.91 Patentblatt 91/10**

(45) Bekanntmachung des Hinweises auf die
Patenterteilung :
**30.09.92 Patentblatt 92/40**

(84) Benannte Vertragsstaaten :
**BE DE ES FR GB IT LU NL**

(56) Entgegenhaltungen :
**DE-A- 3 340 063**
**DE-U- 8 910 572**
**FR-A- 2 552 378**
**GB-A- 1 542 811**

(73) Patentinhaber : **ED. Scharwächter GmbH &
Co.KG.**
**Hohenhagenerstrasse 26-28**
**W-5630 Remscheid 1 (DE)**

(72) Erfinder : **Bremicker, Eduard**
**Büchelstrasse 38e**
**W-5630 Remscheid (DE)**

(74) Vertreter : **Schön, Theodor, Patent- und
Zivilingenieur**
**Sonnleiten 7**
**W-8311 Moosthenning 1 (DE)**

EP 0 415 014 B1

Jouve, 18, rue Saint-Denis, 75001 PARIS

EP 0 415 014 B1

## Beschreibung

Die Erfindung bezieht sich auf einen Fahrzeugaufbau mit in Fahrzeuglängsrichtung verschieblichen Wandungen, insbesondere als Schieberungen oder Planen ausgebildeten Längsseitenwandungen, die an aus einem zentralen Hohlprofil und an dieses angeschlossenen Laufschienenprofilen sowie an dieses angeschlossenen Dichtprofilen gebildeten oberen Längsgurten des Fahrzeugaufbaues aufgehängt sind.

Fahrzeugaufbauten für Nutzfahrzeuge sind in vielen Fällen, z.B. gemäß der GB-A-1 542 811 mit beweglichen Seitenwandungen versehen, um das Be- und Entladen zu erleichtern. Dabei können die beweglichen Seitenwandungen, wie im genannten, im einfacheren Falle durch Seitenwandplanen gebildet sein, die in Fahrzeuglängsrichtung verschieblich an den oberen Längsgurten des Rahmens des Fahrzeugaufbaues aufgehängt sind. Es kann aber auch vorgesehen sein, daß die Seitenwandungen durch starre, gleichfalls in Fahrzeuglängsrichtung verschieblich an den oberen Längsgurten des Fahrzeugaufbaues aufgehängte Seitenrungen gebildet sind und es kann schließlich erforderlich sein das Fahrzeug nachträglich wahlweise mit Seitenwandplanen oder starren Seitenrungen auszurüsten. Ferner wird bei Nutzfahrzeugen dieser Art häufig noch der Wunsch vorhanden sein, daß der Aufbau mit einem zusammenschiebbaren Dach, etwa in der Bauart nach der DE-A-33 45 962 versehen ist, um eine Beladung des Fahrzeuges auch von oben her zu ermöglichen. Der Rahmen des Fahrzeugaufbaues muß daher so gestaltet sein, daß jede der vorgenannten Wandungsarten oder wahlweise ein starres oder bewegliches Dach angebracht werden kann. Darüber hinaus sollen die oberen Längsgurte des Rahmens des Fahrzeugaufbaues trotz der angesichts der zu überspannenden Pritschenlänge erforderlichen Starrheit und Tragfähigkeit ein möglichst geringes Gewicht aufweisen, um die Nutzlast des Fahrzeuges möglichst optimal groß zu erhalten.

Die Summe dieser Anforderungen an einen Fahrzeugaufbau läßt sich mit bekannten Bauarten von Fahrzeugaufbauten und insbesondere oberen Längsgurten für deren Rahmen nicht erreichen, da diese im allgemeinen aus einem durch ein Hohlprofil gebilteten Träger und an diesen, insbesondere seitlich angeschlossenen Führungsschienen für bewegliche Seitenwandungen bestehen, was mit dem Nachteil verbunden ist, daß die Führungsschienen nur sehr wenig zur Steifigkeit des Trägers in vertikaler Richtung beizutragen vermögen, so daß der Träger einen großen Querschnitt und damit ein entsprechendes Gewicht aufweisen muß. Darüber hinaus ist das Anbringen der einzelnen Führungsschienen am Träger arbeitsaufwendig. Ferner sind solche Fahrzeugaufbauten kaum mit einem zusammenschiebbaren Dach zu versehen, wenn der Nutzrauminhalt nicht beeinträchtigt werden soll.

Der Erfindung liegt daher die Aufgabe zugrunde einen Fahrzeugaufbau der eingangs genannten Art zuschaffen, der bei geringstem Herstellungsaufwand ein geringes Gewicht aufweist und der in einheitlicher Ausführung seines Rahmens wahlweise mit Seitenplanen oder Seitenrungen sowie einem starren oder verschieblichen Dach ausgestattet werden kann. Der Erfindung liegt gleichzeitig die Aufgabe zugrunde eine hierzu geeignete Form eines verschieblichen Daches aufzuzeigen.

Diese Aufgabe wird erfindungsgemäß im wesentlichen durch die im Kennzeichen des Anspruchs 1 angegebene Merkmale gelöst, wobei der Hohlträger bezüglich seines Profilquerschnittes vorzugsweise im wesentlichen querliegend angeordnet ist und die vertikal gerichteten Profilstege miteinander und gegebenenfalls mit einem Verstärkungsprofil für einen horizontal gerichteten Profilsteg eine Anzahl paralleler und nach unten schlitzförmig geöffneter Längsträger bilden.

Diese erfindungsgemäße Integrierung aller erforderlichen Teile des oberen Längsgurtes des Rahmens des Fahrzeugaufbaues ermöglicht es für den das wesentliche tragende Teil des Längsgurtes bildenden Hohlträger einen verhältnimäßig kleinen Profilquerschnitt zu wählen und durch die an diesen unterseitig angeschlossenen schlitzförmig geöffneten Längsträger trotzdem eine ausreichende Steifigkeit des Längsgurtes zu gewährleisten. Dabei ist der Längsgurt gleichzeitig in einheitlicher Ausgestaltung zum wahlweisen Anschluß von starren Seitenrungen oder Seitenplanen sowie zur wahlweisen Ausrüstung des Fahrzeuges mit einem starren oder beweglichen Dach ausgestattet. Schließlich kann der erfindungsgemäße Fahrzeugaufbau mit einem geringstmöglichen Herstellungsaufwand hergestellt werden, da für die Längsgurte einheitliche einteilige Ziehprofile verwendet werden.

In bevorzugter Einzelausgestaltung wird vorgeschlagen, daß zur Bildung einer Laufschiene für bewegliche Seitenplanen an die unten liegende Breitseite des ein geschlossenes rechteckiges Querschnittsprofil aufweisenden Hohlträgers zwei einen L-förmigen Profilquerschnitt aufweisende Profilstege angeformt sind und daß der Führungsschiene für die Aufhängung einer längsverschiebbaren Plane, zur Fahrzeugmitte hin benachbart, ein als T-Profil ausgebildeter Profilsteg angeordnet ist, der Laufbahnen für die Rollen einer Aufhängung für verschiebliche Seitenrungen aufweist.

Zur Abstützung eines Daches des Fahrzeugaufbaues ist an der der Fahrzeugmitte zugewandten Seitenwandung des ein geschlossenes rechteckiges Querschnittsprofil aufweisenden Hohlträgers ein in Verlängerung seiner unteren Querwandung angeordneter Fortsatz als Auflage für das Dach angeordnet, wobei der

2

benachbart zur innenliegenden vertikalen Seitenwandung des Hohlträgers auf dem in Verlängerung seiner unterer Querwandung ausgebildeten Fortsatz ein nach oben aufragender T-förmiger Profilsteg angeordnet ist, welcher einerseits die Begrenzung für Laufbahnen für die Spriegel eines Schiebeverdeckes abstützende Laufrollen oder Rollenwagen und andererseits gegebenenfalls eine Verankerung für ein starres Dach bildet.

Zweckmäßigerweise ist weiterhin vorgesehen, daß die die Laufbahnen für die Spriegel tragende Verlängerung der unteren Querwandung des Hohlträgers ihrerseits zu einem Hohlprofil mit etwa rechteckigem Querschnittsprofil ausgebildet ist.

Für die Ausstattung eines erfindungsgemäß ausgestalteten Fahrzeugaufbaues mit einem zusammenschiebbaren Dach wird bezüglich der Ausbildung des zusammenschiebbaren Daches erfindungsgemäß weiterhin vorgeschlagen, daß die Spriegel des Schiebeverdeckes in ihren Endbereichen durch gekrümmte Flachmaterialzuschnitte verlängert sind, derart, daß sie mit diesen Endbereichen den oberen Längsgurt des Fahrzeugaufbaues mit einem geringen Abstand übergreifen. In Verbindung mit der bezüglich der Oberfläche des Hohlträgers tiefliegenden Anordnung der Laufschienenen für das bewegliche Dach wird hierdurch eine extrem flachbauende Form und Anordnung des zusammenschiebbaren Daches geschaffen, die eine optimale Ausnutzung des Volumens des Fahrzeugaufbaues ermöglicht.

Schließlich kann in weiterer Ausgestaltung-der Erfindung noch vorgesehen sein, daß der in Bezug auf die Fahrzeugmitte außenliegende vertikale Profilsteg mit einer nach außen vorspringenden Wulst versehen ist, die ihrerseits mit einer schlitzförmig geöffneten Längsausnehmung versehen ist, in der über einen Randwulst eine streifenförmige Dichtung zur Abdichtung der Aufhängung der längsverschieblichen Seitenwandung des Fahrzeugaufbaues aufgehängt ist, wobei deiser erste Profilsteg mit der außenliegenden Seitenwandung des Hohlträgers fluchtend angeordnet ist.

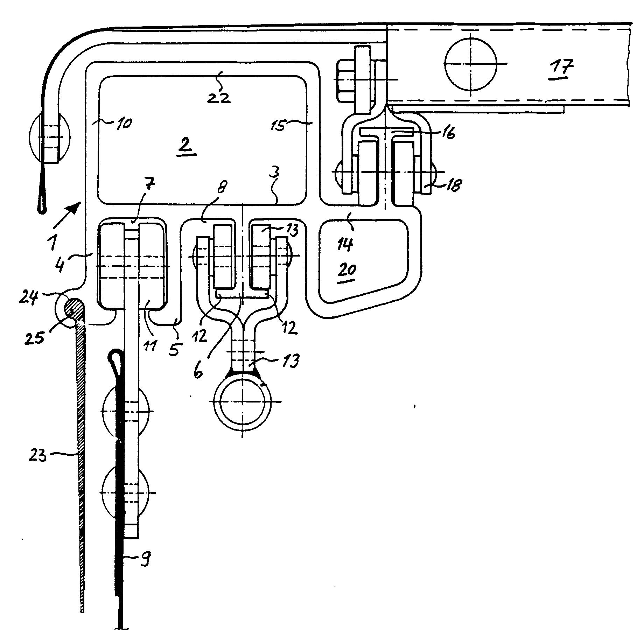

Die Erfindung ist in der nachfolgenden Beispielsbeschreibung anhand eines in der Zeichnung gezeigten Ausführungsbeispieles im Einzelnen beschrieben. In der Zeichnung zeigt die einzige Figur einen Schnitt durch den oberen Längsgurt des Rahmens eines wahlweise mit Seitenplanen oder starren Seitenrungen bzw. einem starren oder zusammenschiebbaren Dach ausrüstbaren Fahrzeugaufbaues.

Der obere Längsgurt 1 ist durch ein einteiliges Ziehprofil gebildet und besteht aus einem Hohlträger 2 mit im wesentlichen rechteckigem Querschnittsprofil, welcher liegend angeordnet ist und an dessen untere Querwandung 3 eine Vielzahl von Profilstegen 4, 5, 6 angeschlossenen ist, zur Bildung von Lauf 7 -oder Führungsschienen 8 dienen. Zur Bildung einer Laufschiene für verschieblich aufgehängte Seitenplanen 9 sind zwei L-förmige einander zugewandte Profilstege 4 und 5 vorgesehen, deren erster außenliegend und mit der vertikalen Außenwandung 10 des Hohlträgers 2 fluchtend angeordnet ist. In der durch die Profilstege 4 und 5 gebildeten Laufschiene 7 ist die Seitenplane 9 vermittels Rollenpaare 11 aufgehängt. Der Laufschiene 7 benachbart und zur Fahrzeugmitte hin versetzt angeordnet ist ein einen T-förmigen Profilquerschnitt aufweisender Profilsteg 6, dessen Profilquerschenkel 12 Laufbahnen für die die starren Seitenrungen verschieblich abstützenden Rollen-oder Rollenwangen 13 bilden. Für die Abstützung des Daches ist an den Hohlträger 2 in Verlängerung seiner unteren Querwandung 3 ein horizontaler Steg 14 angeschlossen, an dem im Abstand zur vertikalen Seitenwandung 15 des Hohlträgers 2 ein T-förmiger Profilsteg 16 angeordnet ist, der Laufbahnen für die die Spriegel 17 eines zusammenschiebbaren Verdeckes abstützenden Rollen oder Rollenwagen 18 begrenzt. Der horizontale Steg 14 kann aber auch zur Abstützung eines starren, in der Zeichnung nicht gezeigten Daches verwendet werden. Der horizontale Steg 14 ist im gezeigten Ausführungsbeispiel ferner zu einem etwa rechteckigen Hohlprofil 20 ergänzt. Zur Anpassung des beweglichen Daches sind die Spriegel 17 in ihren seitlichen Endbereichen als gewölbte Flachmaterialzuschnitte 21 ausgebildet, welche mit einem geringen Abstand die obere Querwandung 22 des Hohlträgers 2 übergreifen. An dem außenliegenden Profilsteg 4 ist eine streifenförmige Dichtung 23 befestigt. Dabei weist der Profilsteg 4 eine schlitzförmig geöffnete Längsnut 24 auf, in welcher die Dichtung 23 vermittels einer Randwulst 25 befestigt ist.

## Patentansprüche

1) Fahrzeugaufbau mit in Fahrzeuglängsrichtung verschieblichen Wandungen, insbesondere als Schieberungen oder Planen (9) ausgebildeten Längsseitenwandungen, die.an aus einem zentralen Hohlprofil (2) und an dieses angeschlossenen Laufschienenprofilen (7,8) sowie an dieses angeschlossenen Dichtprofilen (23) gebildeten oberen Längsgurten (1) des Fahrzeugaufbaues aufgehängt sind, dadurch gekennzeichnet, daß der obere Längsgurt (1) des Rahmens des Fahrzeugaufbaues durch ein einteiliges fortlaufendes Ziehprofil gebildet ist, welches einen oben und außen liegend angeordneten, im wesentlichen ein geschlossenes rechteckiges Querschnittsprofil aufweisenden Hohlträger (2) und eine Vielzahl an diesen angeformter, zur Bildung von Lauf-oder Führungsschienen (7 und 8) dienender, vertikal gerichteter Profilstege (4,5,6,16) umfaßt, wobei die vertikal gerichteten Profilstege (4, 5, 6) miteinander und mit einem Verstärkungsprofil (20) für einen horizontal gerichteten Profilsteg (14) eine Anzahl paralleler und nach unten schlitzförmig geöffneter Längsträger bilden..

2) Fahrzeugaufbau nach Anspruch 1, dadurch gekennzeichnet, daß zur Bildung einer Laufschiene (7) für bewegliche Seitenplanen (9) an die unten liegende Breitseite (3) des ein geschlossenes rechteckiges Querschnittsprofil aufweisenden Hohlträgers (2) zwei einen L-förmigen Profilquerschnitt aufweisende Profilstege (4 und 5) angeformt sind.

3) Fahrzeugaufbau nach Anspruch 1 und 2, dadurch gekennzeichnet, daß der Führungsschiene (7) für die Aufhängung längsverschiebbarer Seitenplanen (9), zur Fahrzeugmitte hin benachbart ein als T-Profil ausgebildeter Profilsteg (6) angeordnet ist, der Laufbahnen für die Rollen (13) einer Aufhängung für verschiebliche Seitenrungen aufweist.

4) Fahrzeugaufbau nach Anspruch 1 bis 3, dadurch gekennzeichnet, daß der der Fahrzeugmitte zugewandten Seitenwandung (15) des ein geschlossenes rechteckiges Querschnittsprofil aufweisenden Hohlträgers (2) benachbart auf einem in Verlängerung dessen unterer Querwandung (3) ausgebildeten Fortsatz (14) ein nach oben aufragender T-förmiger Profilsteg (16) angeordnet ist, welcher die Begrenzung für Laufbahnen für die Spriegel (17) eines Schiebeverdeckes abstützende Laufrollen oder Rollenwagen bildet.

5) Fahrzeugaufbau nach Anspruch 4, dadurch gekennzeichnet, daß die die Laufbahnen für die Spriegel (17) tragende Verlängerung der unteren Querwandung (3) des Hohlträgers (2) ihrerseits zu einem Hohlprofil mit etwa rechteckigem Querschnittsprofil ausgebildet ist.

6) Fahrzeugaufbau nach Anspruch 4 und 5, dadurch gekennzeichnet, daß die Spriegel (17) des Schiebeverdeckes in ihren Endbereichen durch gekrümmte Flachmaterialzuschnitte (21) verlängert sind, derart, daß sie mit diesem Bereich den oberen Längsgurt (1) des Fahrzeugaufbaues übergreifen.

7) Fahrzeugaufbau nach einem der voraufgehenden Ansprüche 1 bis 6, dadurch gekennzeichnet, daß der in Bezug auf die Fahrzeugmitte außenliegende Profilsteg (4) mit einer nach außen vorspringenden Wulst versehen ist, die ihrerseits mit einer schlitzförmig geöffneten Längsausnehmung (24) versehen ist, in der über einen Randwulst (25) eine streifenförmige Abdichtung (23) für die Aufhängung der längsverschieblichen Seitenwandung (9) des Fahrzeugaufbaues aufgehängt ist.

8) Fahrzeugaufbau nach einem der voraufgehenden Ansprüche 1 bis 7, dadurch gekennzeichnet, daß der erste Profilsteg (4) mit der außenliegenden Seitenwandung (10) des Hohlträgers (2) fluchtend angeordnet ist.

## Claims

1. A vehicle superstructure with walls displaceable in the longitudinal direction of the vehicle, in particular longitudinal side walls constructed as sliding members or tarpaulins (9) and which are suspended from upper longitudinal stringers (1) of the vehicle superstructure and formed by a central hollow profile member (2) to which are connected profiled track sections (7, 8) and profiled sealing members (23) characterised in that the upper longitudinal stringer (1) of the frame of the vehicle superstructure consists of a continuous one-piece pulling section member comprising upper and an outer horizontally disposed hollow bearer member (2) having a substantially closed rectangular cross-sectional profile and also comprising, moulded on the latter and serving to form tracks or guide rails (7 and 8), a plurality of vertically orientated profiled webs (4, 5, 6, 16), the vertically orientated profiled webs (4, 5, 6) forming with one another and with a reinforcing section (20) for a horizontally orientated profiled web (14) a number of parallel longitudinal supporting members which have a slotted opening in the bottom.

2. A vehicle superstructure according to Claim 1, characterised in that to form a track (7) for movable side tarpaulins (9), two profiled webs (4 and 5) of L-shaped cross-section are integrally formed on the broad underside (3) of the hollow bearer member (2) which has a closed and rectangular cross-sectional profile.

3. A vehicle superstructure according to Claim 1 and 2, characterised in that towards the centre of the vehicle and adjacent to the guide rail or track (7) for the suspension of longitudinally displaceable side tarpaulins (9) there is a profiled web (6) constructed as a T-section which has tracks for the rollers (13) of a means of suspending displaceable sliding members.

4. A vehicle superstructure according to Claim 1 to 3, characterised in that an upwardly projecting T-shaped profiled web (16) is disposed on that side wall (15) of the hollow bearer member (2) which faces the vehicle centre, on an extension piece (14) constructed to lengthen its bottom transverse wall (3), the said upwardly projecting T-shaped profiled member (16) constituting the edging of tracks for wheels or roller carriages which support the bows (17) of a sliding canopy.

5. A vehicle superstructure according to Claim 4, characterised in that the extension of the lower transverse wall (3) of the hollow bearer member (2) which comprises the tracks for the bows (17) is in turn constructed as a hollow section member of substantially rectangular cross-section.

6. A vehicle superstructure according to Claim 4 and 5, characterised in that the end portions of the bows (17) of the sliding canopy are extended by curved blanks (21) cut from flat material so that these portions engage over the upper longitudinal beam (1) of the vehicle superstructure.

7. A vehicle superstructure according to one of the preceding Claims 1 to 6, characterised in that the profiled web (4) which is on the outside in relation to the vehicle centre is provided with an outwardly projecting bead which is in turn provided with an open slotted longitudinal recess (24) in which, via a marginal bead (25), a strip-like seal (23) is engaged for suspension of the longitudinally displaceable side wall (9) of the vehicle superstructure.

8. A vehicle superstructure according to one of the preceding Claims 1 to 7, characterised in that the first profiled web (4) is disposed flush with the outer side wall (10) of the hollow bearer member (2).

## Revendications

1. Carrosserie de véhicule automobile comportant des parois latérales déplaçables longitudinalement par rapport au véhicule, en particulier des parois latérales constituées de ridelles ou de bâches (9), qui sont suspendues à des poutres longitudinales (1) de la carrosserie du véhicule, constituées d'un profilé creux central (2) se prolongeant par des profilés (7), (8) servant de glissières ou de rails de guidage et par des profilés d'étanchéité (23), *caractérisée en ce que* la poutre longitudinale (1) du châssis de la carrosserie, qui est fabriquée à partir d'un profilé embouti, continu, en une seule pièce, est une poutre creuse (2) disposée en haut et vers l'extérieur, de section transversale fermée sensiblement rectangulaire, se prolongeant par une multitude d'ailes de profilé verticales (4), (5), (6), (16) qui servent de glissière ou de rail de guidage (7), (8), les ailes de profilé verticales (4), (5), (6) et un profilé de renforcement (20) avec une aile horizontale (14) formant des supports longitudinaux, parallèles, ouverts vers le bas sous forme de fentes.

2. Carrosserie de véhicules automobile selon la revendication 1 *caractérisée en ce que*, en vue de former une glissière (7) pour des bâches latérales mobiles (9), la paroi transversale inférieure (3) de la poutre creuse (2) de section transversale fermée de forme rectangulaire, se prolonge par deux ailes de profilé (4), (5) de section transversale en forme de L.

3. Carrosserie de véhicule automobile selon les revendications 1 et 2 *caractérisée en ce que* à côté de la glissière (7) pour la bâche (9) et décalée vers le milieu du véhicule, est prévue une aile de profilé (6) de section transversale en forme de T, servant de glissière aux galets (13) de la suspension de ridelles latérales déplaçables.

4. Carrosserie de véhicule automobile selon l'une des revendications 1 à 3 *caractérisée en ce que* du côté de la paroi verticale (15), orienté vers l'intérieur du véhicule, de la poutre creuse (2) de section transversale fermée rectangulaire, est prévue une aile de profilé (16) en forme de T, orientée vers le haut, disposée sur un prolongement (14) de la paroi transversale inférieure (3) de la poutre creuse (2) et déterminant des glissières pour les galets ou chariots roulants portant les étriers (17) d'une capote pliable.

5. Carrosserie de véhicule automobile selon la revendication 4 *caractérisée en ce que* le prolongement de la paroi transversale (3) inférieure (3) de la poutre creuse (2) qui porte la glissière pour les étriers (1) est un profilé creux de section transversale sensiblement rectangulaire.

6. Carrosserie de véhicule automobile selon les revendications 4 et 5 *caractérisée en ce que* les extrémités des étriers (17) de la capote pliable sont prolongées par des segments de plats (21) recourbés qui s'étendent au-dessus de la poutre longitudinale creuse (1).

7. Carrosserie de véhicule automobile selon l'une des revendications 1 à 6 *caractérisée en ce que* l'aile de profilé (4), extérieure par rapport au milieu du véhicule, comporte un rebord saillant vers l'extérieur et pourvu d'une rainure longitudinale (24) dans laquelle est fixé, grâce à un bourrelet (25) en forme de bandeau, un élément d'étanchéité (23) pour la suspension de la paroi latérale (9) déplaçable longitudinalement.

8. Carrosserie de véhicule automobile selon l'une des revendications 1 à 7 *caractérisée en ce que* la première aile de profilé (4) s'aligne sur la paroi latérale extérieure (10) de la poutre creuse (2).